# EUROPÄISCHE PATENTSCHRIFT

(11) **EP 1 313 583 B1**
(45) Veröffentlichungstag und Bekanntmachung des Hinweises auf die Patenterteilung: **27.10.2004**
(21) Anmeldenummer: 01971640.6
(22) Anmeldetag: 17.08.2001
(51) Int. Cl.: B22F 7/00, B23K 20/04, B23K 20/22, B23K 20/24, B32B 15/01

(54) **VERFAHREN UND EINRICHTUNG ZUR HERSTELLUNG VON VERBUNDWERKSTOFFEN MIT EINEM KERN AUS METALLSCHAUM**
METHOD AND DEVICE FOR PRODUCING COMPOSITE MATERIALS COMPRISING A CORE CONSISTING OF METALLIC FOAM
PROCEDE ET DISPOSITIF DE PRODUCTION DE MATERIAUX COMPOSITES AYANT UNE AME EN MOUSSE METALLIQUE

(30) Priorität: 25.08.2000 DE 10042569
(43) Veröffentlichungstag der Anmeldung: 28.05.2003
(73) Patentinhaber: Steglich, Christian, 01239 Dresden (DE)
(72) Erfinder: Steglich, Christian, 01239 Dresden (DE)
(74) Vertreter: Heyner, Klaus, Dr.-Ing.
(86) Internationale Anmeldenummer: PCT/DE2001/003215
(87) Internationale Veröffentlichungsnummer: WO 2002/016064

(56) Entgegenhaltungen:
- EP-A- 0 997 215
- EP-A- 1 008 406
- EP-A- 1 068 916
- WO-A-01/53023
- WO-A-98/33621
- DE-A- 10 024 004
- DE-C- 4 124 591
- US-A- 3 372 465
- US-A- 4 227 061

## Beschreibung

Die Erfindung betrifft ein Verfahren und eine Einrichtung zur Herstellung von Verbundwerkstoffen mit einem Kern aus Metallschaum, wobei zwischen dem Kern und einer oder mehreren metallischen Deckschichten eine metallische Bindung besteht.

Verbundwerkstoffe mit porösem Kern aus Metall und Deckschichten oder Deckblechen aus massivem Metall sowie Verfahren zu deren Herstellung sind in mehreren Arten bekannt.

Bekannt sind erstens metallische Platten mit einem Kern aus Wabenstrukturen, die z.B. aus dünnem Aluminiumblech bestehen und die durch Klebstoffe mit den Deckblechen verbunden sind. Diese sogenannten "honey-comb" Platten werden für verschiedene Zwecke, besonders für den Leichtbau, eingesetzt.

Weiterhin sind Verbundwerkstoffe bekannt, bei denen ein plattenförmiger Kern aus Metallschaum mit Deckschichten oder Blechen durch Kleber verbunden sind. Ein solcher Sandwich-Verbundwerkstoff ist zum Beispiel in der Patentschrift US 37 11 363 beschrieben. Beide Typen von geklebten Verbundwerkstoffen haben den Nachteil, dass sie wegen der Verwendung von Klebstoffen eine verhältnismäßig geringe Temperaturbeständigkeit haben und sich deshalb nicht für Konstruktionen eignen, bei denen Verbindungen zwischen Bauteilen durch Schweißverfahren oder andere Fügeverfahren, bei denen hohe Temperaturen aufgewendet werden, verbunden werden.

In DE 43 18 540 A1 wird ein Verfahren und eine Vorrichtung zur Herstellung eines Verbundmaterials beschrieben, bei dem flüssiger Aluminiumschaum auf vorgewärmtes Aluminiumblech aufgebracht wird und wobei mittels einer beheizten Reguliereinrichtung, durch Verprägen von Schaum und Blech, Formteile hergestellt werden. Dieses Verfahren gestattet zwar eine metallische Verbindung zwischen einem Blech und Metallschaum, hat aber den Nachteil, dass die Größe der Bauteile durch die Form begrenzt ist und das Deckblech nur einseitig auf den Metallschaumkörper aufgebracht werden kann.

Ein Verfahren zur Herstellung von Verbunstoffen die aus einem Metallschaum und zwei Deckschichten besteht, ist in WO-A-9833621 durch Druck und Erwärmung realisierbar um eine metallische Bindung zu erzeugen.

Ein weiteres Verfahren ist aus der Patentschrift DE 44 26 627 C2 bekannt. Dabei werden ein Kern aus pulverförmigen aufschäumbaren Metallwerkstoffen und mindestens eine Deckschicht aus Massivmaterial metallisch verbunden und der Kern dieses Verbundes durch Erwärmung des gesamten Bauteils aufgeschäumt. Dieses Verfahren hat den Nachteil, dass nach dem Aufschäumen des Verbundes die Qualität, Porengröße und Gleichmäßigkeit der Metallschaumstruktur im Inneren des Bauteils nicht oder nur sehr aufwendig kontrollierbar ist. Weiterhin sind die Kosten dieses Verfahrens wegen der Verwendung von Metallpulver und weiterer Bestandteile als Treibmittel sehr hoch. In der Gesamtbilanz hat diese pulvermetallurgische Methode einen großen Energieaufwand im Vergleich zur schmelzmetallurgischen Herstellung von Metallschaum.

Kontinuierliche Verfahren zur Herstellung von Verbundstoffen mit aufschäumbaren Kern sind bereits in EP-A-1068916, WO-A-01-53023 oder in EP-A-997215 erwähnt.

Hier setzt die nachfolgend beschriebene Erfindung an.
Der Erfindung liegt die Aufgabe zugrunde, ein Verfahren und eine Einrichtung zur Herstellung von Verbundwerkstoffen mit einem Kern aus Metallschaum zu schaffen, mit denen sich die genannten Nachteile des Standes der Technik dahingehend vermeiden lassen, dass mit einem kontinuierlichen oder halbkontinuierlichen Prozess eine hohe Produktivität und damit eine vergleichsweise kostengünstige Herstellung der Verbundwerkstoffe ermöglicht wird.

Darüber hinaus soll ein Verfahren und eine Einrichtung zur Herstellung von plattenförmigen Verbundwerkstoffen entwickelt werden, mit denen der Metallschaumkern metallisch mit einer oder mehreren Deckschichten verbunden wird, wodurch gegenüber geklebten Verbundwerkstoffen eine höhere Temperaturbeständigkeit des Verbundes erreicht wird.
Eine erfindungsgemäße Lösung dieser Aufgabe ist in den Patentansprüchen 1, 2 für das Verfahren sowie 6 für die Einrichtung angegeben.

Nach der Konzeption der Erfindung wird ein abgekühlter plattenförmiger Körper aus Metallschaum, der bereits ausgehärtet ist, mit einer oder mehreren erwärmten Deckschichten durch Walzen verbunden, so dass zwischen dem Metallschaumkörper und der oder den Deckschichten eine metallische Bindung entsteht.Bei der Verfahrensdurchführung nach den Ansprüchen 1 und 2 erfolgt die Erwärmung der Deckschicht oder der Deckschichten in einer oder zwei Erwärmungsvorrichtungen kurz vor dem Verbinden mit dem Metallschaumkörper durch den Walzprozess. Zur Erreichung vergleichsweise geringer Kosten des Verbundwerkstoffes sollte der Metallschaumkörper vorzugsweise aus gießtechnisch hergestelltem Metallschaum bestehen. Die Erwärmungsvorrichtungen sind in der Lage, die Deckschichten kontinuierlich während des Durchlaufs auf die, für das metallische Verbinden, erforderliche Temperatur zu erwärmen. Die Erwärmung der Deckschichten kann sowohl durch elektrische Induktion als auch durch Brenner, die mit Gas oder anderen Heizmedien betrieben werden, durchgeführt werden. Die erwärmten Deckschichten werden bis zum Walzspalt in einer Führung geleitet, die wärmeisolierend ist und unmittelbar an die Erwärmungsvorrichtung anschließt.

Die Vorbehandlung der Deckschichten vor dem Einlauf in die Erwärmungsvorrichtungen gemäß Anspruch 3 soll gewährleisten, dass Oxidschichten und mögliche Rückstände von Walzölen oder Walzemulsionen bei Verwendung von Blechen, die auch direkt von Coils abgezogen werden können, sicher entfernt werden. Es ist zweckmäßig, dass die Deckschichten durch eine Treibvorrichtung mit regelbarer Geschwindigkeit in die Reinigungsvorrichtungen und die Erwärmungsvorrichtung geführt werden. Die Treibvorrichtungen müssen reversierbar sein, um bei Unterbrechung des Prozesses oder Havarien die Beräumung der Einrichtung zu ermöglichen. Sobald das Walzgerüst die Deckschichten gefasst hat, müssen die Drehzahlen von Treibeinrichtungen und Walzgerüst aufeinander abgestimmt geregelt werden. Ersatzweise kann ab diesem Zeitpunkt auch die Treibvorrichtung außer Betrieb gesetzt werden, so dass das Walzgerüst die Deckschichten dann einzieht.

Die Vorbehandlung der Metallschaumkörper nach Anspruch 3 kann in Abhängigkeit von deren Größe, Art und Beschaffenheit in unterschiedlicher Weise erforderlich sein. Wenn die Ebenheit der Oberflächen im Verhältnis zur Dicke der Deckschichten ausreicht, um nach dem Walzprozess einen planparallelen und ebenen Verbundkörper zu erhalten, kann einfaches Bürsten ausreichen. Insbesondere bei starker Gusshaut an der Oberfläche des Metallschaums kann eine spanende Bearbeitung, zum Beispiel durch Fräsen der Fläche, notwendig sein. Diese Bearbeitung kann auch durch eine, vor der erfindungsgemäß beschriebenen Einrichtung, im kontinuierlichen Fluss angeordnete Vorrichtung vorgenommen werden.
Erfindungsgemäß kann bei gießtechnisch hergestellten Metallschaumkörpem die Gusshautoberfläche auch im noch formbaren halbflüssigen Zustand geglättet und mit einer Textur versehen werden. Bei Aufwalzung einer Deckschicht auf nur eine Seite des Metallschaumkörpers kann eine Gusshaut auf der betreffenden Seite entfernt werden, und auf der zweiten Seite wird die Gusshaut im Walzprozess weiter geglättet.

Der Walzprozess sollte von seinen Parametern her so eingestellt sein, dass auf den Verbundwerkstoffkörper ein solcher Druck wirkt, dass im Metallschaum nur ein geringer Umformgrad erreicht wird.
Eine Gusshaut des Metallschaumkörpers kann erfindungsgemäß beim Einwalzen von Drahtgewebe oder Drahtgeflecht gemäß Anspruch 5 bei Verwendung von Drahtmaterial, das einen höheren Schmelzpunkt als der Metallschaumwerkstoff hat, örtlich aufgeschmolzen werden. Das Drahtgewebe wird in die Gusshaut eingedrückt und als Verstärkungsebene des Verbundwerkstoffes eingelagert und metallisch mit dem Metallschaum verbunden.
Die Verbundplatte kann nach dem Walzvorgang kontinuierlich oder diskontinuierlich in einer Thermokammer thermisch behandelt werden. Die Zeiten und Temperaturen für den Ausgleich gemäß Anspruch 4 können abhängig von den Werkstoffen sehr unterschiedlich sein.
Bei entsprechender Zähigkeit des Grundwerkstoffes des Metallschaums kann im erwärmten Zustand in begrenztem Umfang eine Umformbarkeit der Verbundplatte in allen Achsen der Ebene, zum Beispiel durch Biegen, erreicht werden. Die dafür erforderlichen Vorrichtungen zum Trennen und Umformen können zur Vermeidung einer erneuten. Erwärmung des Verbundwerkstoffes, unmittelbar nach der erfindungsgemäßen Einrichtung, in einer nachfolgenden technologischen Linie angeordnet werden.

Die mit der Erfindung erzielten Vorteile werden insbesondere darin gesehen, dass nach dem erfindungsgemäßen Verfahren kostengünstige Leichtbau-Verbundwerkstoffe hergestellt werden können, die eine hohe Temperaturbeständigkeit und gute Verbindungsmöglichkeiten der Platten durch Schweißverfahren und andere thermische Fügeverfahren gewährleisten. Ein weiterer Vorteil ist, dass durch das kontinuierliche Verfahren die Möglichkeit zur Herstellung von Verbundplatten mit großen Abmessungen, besonders hinsichtlich der Länge, gegeben ist.

Zusätzlich ist vorteilhaft, dass mittels des erfindungsgemäßen Verfahrens und der erfindungsgemäßen Einrichtung verschiedene Kombinationen von Werkstoffen und Strukturen von sowohl Deckschichten als auch Metallschaumkörpern zu verschiedenartigen Verbundwerkstoffen mit spezifischen Eigenschaften verarbeitet werden können. Es können Verbundwerkstoffe mit verschiedenen Arten und Materialien von Kernen aus Metallschaum, beziehungsweise Metallschwamm und variablen metallischen Deckschichten kombiniert und solche Verbundwerkstoffe in großen Abmessungen hergestellt werden.

So ist es zum Beispiel möglich, einen Verbundwerkstoff herzustellen, dessen Deckschichten aus Stahlblech und dessen Kern aus Aluminiumschaum bestehen. Dieser Verbundwerkstoff hat die vorteilhafte Eigenschaft, dass die Oberflächen sehr widerstandsfähig gegen mechanische Beanspruchungen sind und das Bauteil trotzdem ein geringes spezifisches Gewicht hat.
Die Verfahrensdurchführung gestattet auch eine einfache Kontrolle der Gleichmäßigkeit und der Größe der Poren des Schaumkerns und somit die Gewährleistung einer gleichbleibenden Qualität des Verbundes.

Weitere Einzelheiten, Merkmale und Vorteile der Erfindung ergeben sich aus der nachstehenden Erläuterung eines Ausführungsbeispiels.

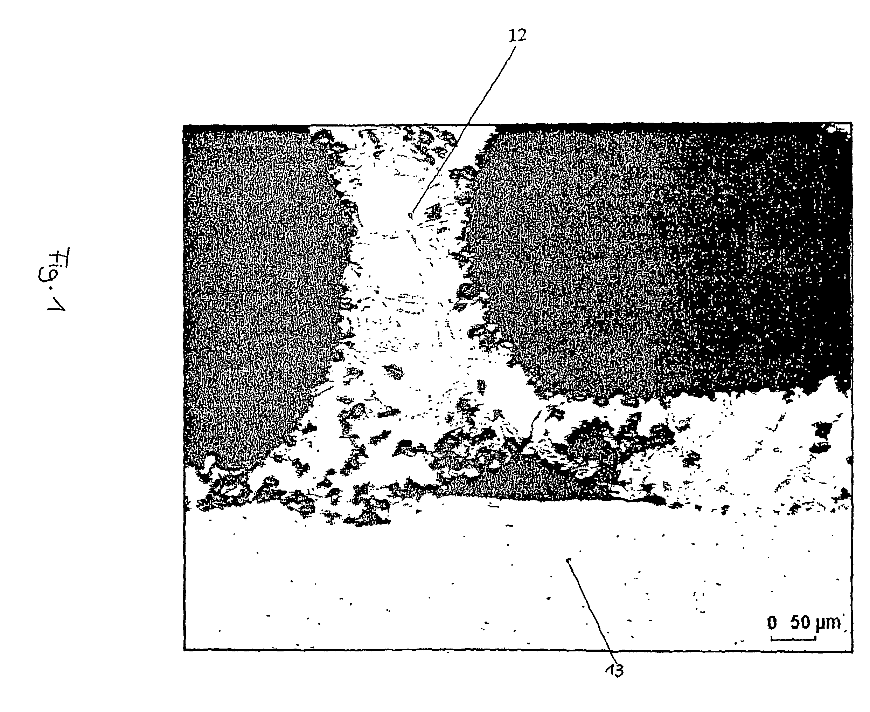

Für die Herstellung einer Leichtbau-Verbundplatte wurde schmelzmetallurgisch hergestellter partikelverstärkter Aluminiumschaum nach dem erfindungsgemäßen Verfahren mit einem Deckblech aus Aluminium verbunden. Der verwendete Aluminiumschaum hat eine Dichte von 0,3 kg/dm³, während die Dichte von Aluminium 2,7 kg/dm³ beträgt. In der Figur 1 ist eine Mikroskopaufnahme von einer Verbindungsstelle zwischen dem Aluminiumblech 13 und einer Zelle des Aluminiumschaums 12 zu sehen. Deutlich sichtbar ist, dass ein Teil der zu Beginn des Verbindungsprozesses kalten Zellstruktur des Metallschaums in das zu diesem Zeitpunkt erwärmte und somit weiche Aluminiumblech eingedrückt wurde. Sichtbar ist auch, dass die beiden Teile miteinander verschmolzen und eine metallische Verbindung eingegangen sind.

Wenn man eine solche Verbundplatte mit einer Dicke des Kerns aus Aluminiumschaum 12 von 15 mm und von zwei Aluminiumblechen 13 von je 1,5 mm herstellt, so beträgt die Dichte des Verbundwerkstoffes rund 0,7 kg/dm³. Eine massive Aluminiumplatte der gleichen Dicke von 18 mm hätte ein um den Faktor 3,9 größeres Gewicht, wobei die Steifigkeit der Platte nur geringfügig höher wäre.

Die Verbundplatte kann an den Deckblechen mit anderen Bauteilen mittels geeigneter Schweißverfahren, wie zum Beispiel WIG- oder Laserschweißen, verbunden werden.
Da beide Komponenten des Verbundwerkstoffes aus dem gleichen Grundmaterial bestehen, kann die Verbundplatte dem Metallrecycling zugeführt werden.
Eine solche Leichtbau-Verbundplatte bietet vielfältige Einsatzmöglichkeiten. Besonders kann bei Fahrzeugen aller Art und beweglichen Einrichtungen Masse eingespart und somit der Energieverbrauch gesenkt werden.

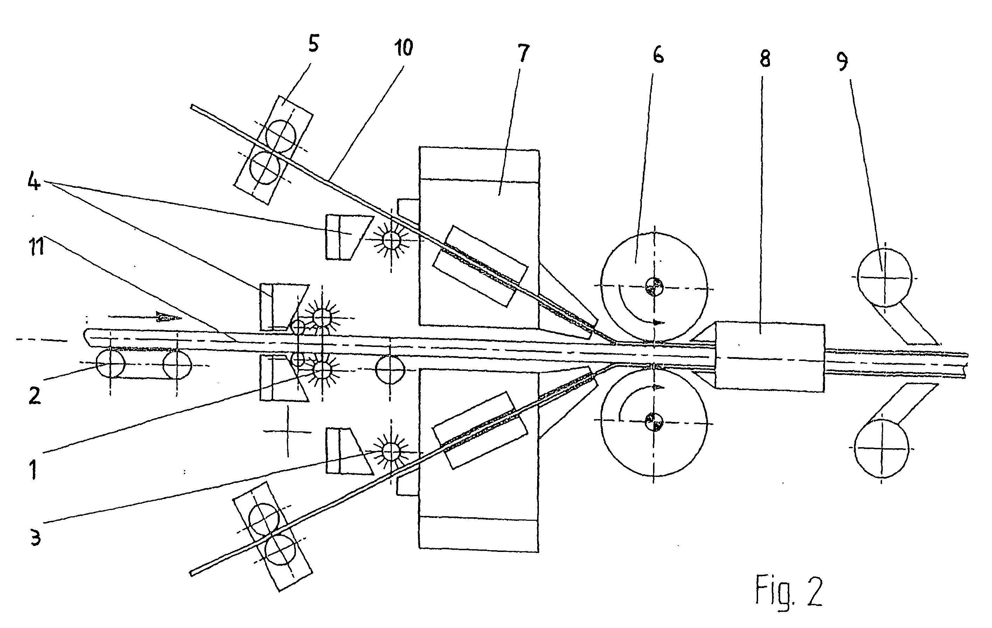

Die erfindungsgemäße Einrichtung zur Herstellung von Verbundwerkstoffen mit einem Kern aus Metallschaum soll anhand der schematischen Darstellung in Figur 2 näher erläutert werden. Figur 2 zeigt einen senkrechten Schnitt in Richtung des technologischen Flusses durch ein Ausführungsbeispiel einer erfindungsgemäßen Einrichtung zur Herstellung von Verbundwerkstoffen mit einem Kern aus Metallschaum. Die Einrichtung besteht im Einlaufteil aus einer Transportvorrichtung 2 für den Metallschaumkörper 11, ein oder zwei Reinigungsvorrichtungen 3 für Deckschichten 10, mehreren Absaugungen 4, für die bei der Reinigung der Deckschichten 10 und des Metallschaumkörpers 11 anfallenden Stäube und Verunreinigungen, einer oder mehreren Treibvorrichtungen 5 für die Deckschichten 10 und einer oder zwei Oberflächenbehandlungsvorrichtungen 1 für den Metallschaumkörper 11.

Die Transportvorrichtung 2 kann ein bekannter Rollgang oder ein Bandförderer oder eine Kombination aus beiden sein und zusätzlich mit einer Treibvorrichtung ausgestattet werden, die nicht dargestellt ist. Im Mittelteil der Einrichtung sind eine oder zwei Erwärmungsvorrichtungen 7 und ein Walzgerüst 6 angeordnet. Die Erwärmungsvorrichtung 7 ist auf der Auslaufseite mit einer wärmeisolierenden Führung ausgestattet, die die Deckschichten 10 bis kurz vor den Walzspalt umschließt und eine vorzeitige Abkühlung der Deckschichten verhindert. Das Walzgerüst 6 kann ähnlich bekannten Walzgerüsten mit Duo- oder Quartowalzensätzen ausgestattet sein. Der Auslaufteil der erfindungsgemäßen Einrichtung besteht aus einer Thermokammer 8 und Kühlvorrichtungen 9.
Die erfindungsgemäße Einrichtung wirkt in der Weise, dass von der Transportvorrichtung 2 ein plattenförmiger erkalteter Metallschaumkörper 11 durch die Oberflächenbehandlungsvorrichtung 1 in den Walzspalt des Walzgerüstes 6 bewegt wird.

In der Oberflächenbehandlungsvorrichtung 1 kann sowohl die Reinigung von Verunreinigungen und Oxidschichten, eine metallische Aktivierung der Oberflächen als auch eine spanende Bearbeitung der möglicherweise vorhandenen Gusshaut des Metallschaumkörpers erfolgen. Die beschriebene Oberflächenbehandlung kann gleichzeitig auf der Ober- und Unterseite des Metallschaumkörpers oder nur einseitig durchgeführt werden. Entsprechend kann die Behandlung und Verbindung der Deckschichten 10 zum Metallschaumkörper 11 ein- oder beidseitig vorgenommen werden. Der Einfachheit halber wird nachfolgend nur die Behandlung einer Deckschicht beschrieben.

Eine bandförmige Deckschicht 10, die wie in Anspruch 5 beschrieben beschaffen sein kann, wird mittels der Treibvorrichtung 5 durch die Reinigungsvorrichtung 3 in die Erwärmungsvorrichtung 7 eingeführt. Wenn die Deckschicht quasi endlos von einem Coil zugeführt wird, das in Figur 1 nicht dargestellt ist, kann die Treibvorrichtung 5 ebenfalls zum Abziehen der Deckschicht 10 von einer nicht dargestellten Abwickelvorrichtung eingesetzt werden. Die Treibvorrichtung 5 ist gleichermaßen in der Lage, durch Drehen der Treibrollen in die entgegengesetzte Richtung die Deckschicht aus der Erwärmungsvorrichtung 7 zurückzuziehen.

Die Reinigungsvorrichtung 3 entfernt auf der beim Verbinden mit dem Metallschaumkörper 11 diesem zugewandten Seite der Deckschicht 10 vorhandene Rückstände von Konservierungsmitteln oder Oxidschichten. In der Erwärmungsvorrichtung 7 werden die Deckschichten 10 gleichmäßig über die Breite verteilt auf die erforderliche Temperatur, wie in den Ansprüchen 1 und 2 beschrieben, erwärmt. Um die schnelle Abkühlung von Deckschichten mit geringer Dicke zu vermeiden, wird das erwärmte Band durch einen geschlossenen und wärmeisolierten Kanal bis in die Nähe des Walzspaltes geführt.
Kurz vor dem Walzspalt treffen Deckschicht 10 und Metallschaumkörper 11 aufeinander. Sie werden durch die rotierenden Walzen des Walzgerüstes 6 erfasst und im Walzspalt wird die Pressung zwischen den Komponenten so groß, das sie sich metallisch zum Verbundwerkstoff verbinden.

Um während des Walzvorganges die gleiche Geschwindigkeit von Metallschaumkörper 11, Deckschichten 10 und Walzenmantelfläche zu gewährleisten, müssen die Antriebe von Treibvorrichtung 5, Transportvorrichtung 2 und Walzgerüst 6 aufeinander abgestimmt geregelt werden. Zur Sicherung der jeweils notwendigen Temperatur der Deckschichten 10 entsprechend den Ansprüchen 1 und 2, kann es auch erforderlich sein, die Leistung der Erwärmungsvorrichtungen 7 abhängig von der Walzgeschwindigkeit zu steuern.

Nach dem Verlassen des Walzgerüstes 6 kann zur Stabilisierung des Verbundes ein Temperieren der Verbundplatten notwendig sein. In der Thermokammer 8, die unmittelbar nachfolgend in der Walzrichtung angeordnet ist, kann der Verbundwerkstoff auf eine bestimmte Ausgleichstemperatur erwärmt oder nur über einen bestimmte Zeitraum warmgehalten werden. Die Thermokammer 8 und die Kühlvorrichtungen 9 sind regelbar und gestatten ein variables Erwärmen, Warmhalten und Abkühlen der Verbundwerkstoffe.

Die Kühlvorrichtung 9 arbeitet vorzugsweise mit Luft, wobei die Abkühlgeschwindigkeit durch veränderlichen Luftdurchsatz gesteuert wird. Insbesondere kann auch durch verschiedene Längen der Thermokammer 8 die Dauer Temperierens und die Verweilzeit des Verbundwerkstoffes im durchlaufenden Prozess beeinflusst werden. Weiterhin besteht die Möglichkeit ohne Einsatz der Kühlvorrichtung 9 die oben beschriebenen Umformprozesse anschließend auszuführen.

### LISTE DER BEZUGSZEICHEN

- 1: Oberflächenbehandlungsvorrichtung
- 2: Transportvorrichtung
- 3: Reinigungsvorrichtung
- 4: Absaugung
- 5: Treibvorrichtung
- 6: Walzgerüst
- 7: Erwärmungsvorrichtung
- 8: Thermokammer
- 9: Kühlvorrichtung
- 10: Deckschicht
- 11: Metallschaumkörper
- 12: Aluminiumschaumstruktur
- 13: Aluminiumblech

## Patentansprüche

1. Verfahren zur Herstellung von Verbundwerkstoffen mit einem Kern aus Metallschaum, wobei zwischen dem Kern und einer oder mehreren metallischen Deckschichten eine metallische Bindung besteht und der bereits ausgehärtete Metallschaumkörper aus geschlossenporigem oder auch offenporigen Metallschaum oder auch Metallschwamm bestehen kann,
**dadurch gekennzeichnet, dass** eine oder mehrere Deckschichten (10) kurz vor dem Verbinden mit dem Metallschaumkörper (11) durch Walzen (6) oder ein anderes Plattierverfahren in einer oder zwei Erwärmungsvorrichtungen (7) kontinuierlich während des Durchlaufens der Deckschicht(en) (10) auf eine Temperatur erwärmt werden, die entsprechend der jeweiligen Fließkurve des Materials so hoch ist, dass die Deckschichten (10) eine Fließfestigkeit haben, die geringfügig niedriger ist als die Druckfestigkeit des annähernd auf Raumtemperatur abgekühlten Metallschaumkörpers (11).

2. Verfahren zur Herstellung von Verbundwerkstoffen mit einem Kern aus Metallschaum, wobei zwischen dem Kern und einer oder mehreren metallischen Deckschichten eine metallische Bindung besteht und der bereits ausgehärtete Metallschaumkörper aus geschlossenporigem oder auch offenporigen Metallschaum oder auch Metallschwamm bestehen kann, **dadurch gekennzeichnet, dass** die Deckschichten (10) kurz vor dem Verbinden mit dem Metallschaumkörper in einer oder zwei Erwärmungsvorrichtungen kontinuierlich während des Durchlaufens der Deckschichten(10) erwärmt werden, wobei bei Deckschichten (10) bestehend aus Werkstoffen, die höhere Schmelztemperaturen haben als der Metallschaumkern (11) und deren Fließfestigkeit im erwärmten Zustand über der Fließfestigkeit oder Druckfestigkeit des kalten Metallschaumkörpers liegt, die Deckschichten (10) auf eine Temperatur erwärmt werden, welche so hoch ist, dass an den Berührungsflächen zwischen Deckschicht (10) und Kern (11) der Metallschaum während des Walzvorganges (6) die äußeren Zellen des Metallschaums aufschmelzen und die Verbindung zwischen Deckschicht und Kern durch Adhäsion oder Diffusion des Metallschaumwerkstoffes an den Deckschichten hergestellt wird.

3. Verfahren zur Herstellung von Verbundwerkstoffen mit einem Kern aus Metallschaum gemäss den Ansprüchen 1 oder 2, **dadurch gekennzeichnet, dass** vor dem Durchlaufen der Deckschichten (10) durch die Erwärmungsvorrichtung, (7) deren dem Metallschaumkörper (11) zugewandte Seiten metallisch blank gereinigt (3) werden und dass die Oberflächen des Metallschaumkörpers (11) kurz vor dem Verbinden mit der oder den Deckschichten (10) gereinigt (1) und metallisch zum Beispiel durch Bürsten aktiviert werden.

4. Verfahren zur Herstellung von Verbundwerkstoffen mit einem Kern aus Metallschaum nach einem der Ansprüche 1 bis 3, **dadurch gekennzeichnet, dass** nach dem Walzvorgang (6) die Temperatur des Verbundwerkstoffes (10, 11) eine gewisse Zeit auf einem Niveau gehalten wird, bei dem eine Diffusion und ein Ausgleich zwischen den Materialien der Deckschichten (10) und des Metallschaumkörpers (11) stattfinden kann und dass danach der Werkstoffverbund gesteuert abgekühlt wird.

5. Verfahren zur Herstellung von Verbundwerkstoffen mit einem Kern aus Metallschaum nach einem der Ansprüche 1 bis 4, **dadurch gekennzeichnet, dass** eine oder mehrere Deckschichten (10) sowohl aus Metallblech oder strukturierten flächenförmigen Metallteilen als auch aus Drahtgeflecht oder Drahtgewebe verschiedener Metalle bestehen können.

6. Einrichtung zur Herstellung von Verbundwerkstoffen mit einem Kern aus Metallschaum zur Durchführung des Verfahrens nach den Ansprüchen 1 bis 5, **dadurch gekennzeichnet, dass** sie im Wesentlichen aus Reinigungsvorrichtungen (3), Treibvorrichtungen (5) und Erwärmungsvorrichtungen (7) mit wärmeisolierenden Führungen für die Behandlung der Deckschichten (10), aus Oberflächenbehandlungsvorrichtungen (1) für die Behandlung des Metallschaumkörpers (11), aus einem Walzgerüst (6) zum Verbinden von Deckschichten und Metallschaumkörper sowie aus einer Thermokammer (8) und Kühlvorrichtungen (9) besteht, wobei die beiden letztgenannten Vorrichtungen dem Walzgerüst (6) nachgeordnet und steuerbar sind, so dass sie ein variables Erwärmen, Warmhalten und Abkühlen des Verbundwerkstoffes ermöglichen.

7. Einrichtung zur Herstellung von Verbundwerkstoffen mit einem Kern aus Metallschaum nach Anspruch 6, **dadurch gekennzeichnet, dass**
a) beidseitig zum zwischen den beiden Deckschichten (10) geführten Metallschaumkörper (11) Oberflächenbehandlungsvorrichtungen (1) vorhanden sind und
b) zur Reinigung der beiden Deckschichten (10) einseitig auf der dem Metallschaumkörper (11) zugewandten Seite Reinigungsvorrichtungen (3) angeordnet sind und
c) den Reinigungsvorrichtungen (3) Erwärmungsvorrichtungen (7) für die Deckschichten (10) nachgeordnet sind und
d) zum aufeinander abgestimmten Antrieb von Deckschichten (10) und Metallschaumkörper (11) die Treibvorrichtungen (5) für die Deckschichten und die Transportvorrichtung (2) für den Metallschaumkörper vorgesehen sind und
e) die Verbindung von Metallschaumkörper (11) und der von beiden Seiten auf den Metallschaumkörper zulaufenden Deckschichten (10) im nachgeordneten Walzgerüst (6) erfolgt.

8. Einrichtung zur Herstellung von Verbundwerkstoffen mit einem Kern aus Metallschaum nach Anspruch 6 oder 7, **dadurch gekennzeichnet, dass** die Oberflächenbehandlungsvorrichtungen (1) die metallische Aktivierung der Oberflächen des Metallschaumkörpers bewirken und die Deckschichten nach der Behandlung durch die Reinigungsvorrichtungen (3) in den Erwärmungsvorrichtungen (7) gleichmäßig über die Fläche verteilt auf die zum Verbinden erforderliche Temperatur erwärmt werden und dass während des Walzprozesses die Antriebe von Treibvorrichtungen (5), Transportvorrichtung (2) und Walzgerüst (6) aufeinander abgestimmt geregelt werden und die Heizleistung der Erwärmungsvorrichtungen (7), abhängig von der Walzgeschwindigkeit, gesteuert wird.

## Claims

1. The invention relates to a process for producing composite materials with a nucleus of metal foam, where a metallic bond exists between the nucleus and one or more metal coatings and where the already cured metal foam body may consist of closed-cell or open-cell metal foam or a metal sponge and said invention is **characterized in that** one or more coatings (10) are continuously heated while passing through one or two heating devices (7) shortly before being bonded with the metal foam body (11) by means of rollers (6) or another plating procedure and where said coating(s) (10) are heated to a temperature that is, correspondent to the respective material's flow curve, so high that the coatings (10) have a resistance to flow slightly lower than the resistance to flow of the metal foam body (11), said foam body having cooled almost to room temperature.

2. The invention relates to a process for producing composite materials with a nucleus of metal foam, where a metallic bond exists between the nucleus and one or more metal coatings and where the already cured metal foam body may consist of closed-cell or open-cell metal foam or a metal sponge and said invention is **characterized in that** said coatings (10) are continuously heated while passing through one or two heating devices (7) shortly before being bonded with the metal foam body and where the coatings (10) consist of materials that have a higher melting temperature than the metal foam nucleus (11) and where the resistance to flow, in the heated state, of said materials is above the resistance to flow or pressure strength of the metal foam body in cold state and where the coatings (10) are heated to a temperature so high that, during the rolling process (6), the outer cells of the metal foam are melted on at the contact areas between coating (10) and nucleus (11), causing the coating and the nucleus to be bonded by means of adhesion or diffusion of the metal foam material at the coatings.

3. The invention relates to a process for producing composite materials with a nucleus of metal foam according to Claim 1 or 2, **characterized in that** those sides of the coatings facing the metal foam body (11) are cleaned metallic blank (3) before the coatings (10) are passed through the heating device, (7) and where the surfaces of the metal foam body (11) are cleaned (1) and the metal of the metal foam body is activated by means of brushes for example shortly before said metal foam body (11) is bonded with the coating(s) (10).

4. The invention relates to a process for producing composite materials with a nucleus of metal foam according to Claim 1 to 3, **characterized in that** subsequent to the rolling process (6), the temperature of the composite metal (10, 11) is maintained for a specific period of time at a level at which a diffusion and an equalization between the material of the coatings (10) and the metal foam body can occur and where subsequently the composite is cooled in a controlled manner.

5. The invention relates to a process for producing composite materials with a nucleus of metal foam according to Claim 1 to 4, **characterized in that** one or more coatings (10) may consist of sheet metal or structured planiform metal parts or of woven wire or woven wire fabric composed of a variety of metals.

6. The invention relates to the installations for producing composite materials with a nucleus of metal foam according to Claim 1 to 5, **characterized in that** they essentially comprise cleaning devices (3), driving devices (5) and heating devices (7) with heat insulating guides for treatment of the coatings (10), surface treatment devices (1) for treatment of the metal foam body, a roll stand (6) to bond the coatings and the metal foam body, and a thermal chamber (8) and a cooler (9), where said chamber and cooler are arranged subsequent to the roll stand (6) and are controllable in a manner that permits a variable heating, heat maintenance and cooling of the composite.

7. The invention relates to the installations for producing composite materials with a nucleus of metal foam according to Claim 6, **characterized in that**
a) surface treatment devices (1) are present on both sides of the metal foam body (11), which is driven between the two coatings (10) and
b) where cleaning devices (3) are arranged to one side at the side facing the metal foam body (11) for the purpose of cleaning the two coatings and
c) where heating devices (7) for the coatings (10) are arranged subsequent to said cleaning devices and
d) where, for the purpose of driving coatings (10) and metal foam body (11) in a coordinated manner, the driving devices (5) are provided for driving the coatings and the transport device (2) is provided for driving the metal foam body and
e) where the bonding of metal foam body (11) and coatings (10), said coatings running in toward the metal foam body form both sides, occurs in the roll stand (6) arranged subsequently.

8. The invention relates to the installations for producing composite materials with a nucleus of metal foam according to Claim 6 or 7, **characterized in that** the surface treatment devices (1) effect the metallic activation of the metal foam body's surfaces and where the coatings, subsequent to treatment by the cleaning devices (3), are distributed evenly across the surface and are heated to the temperature that is required for the bonding inside the heating device (7) and where the control of the respective for driving device (5), transport device (2) and roll stand (6) is coordinated during the rolling process and where the heat output of the heating device (7) is regulated dependent on the rolling speed.

## Revendications

1. Procédé de fabrication de matériaux composites avec un noyau en mousse métallique, dans lequel une liaison métallique existe entre le noyau et une ou plusieurs couches finales métalliques et dans lequel le corps en mousse métallique déjà durci par précipitation peut être composé par une mousse métallique à porosité fermée ou à porosité ouverte ou également par une éponge métallique, **caractérisé en ce qu'**une ou plusieurs couches finales (10) sont réchauffées de façon continue tout en passant à travers un ou deux dispositifs de réchauffement (7) juste avant la liaison avec le corps en mousse métallique (11), au moyen de laminoirs (6) ou un autre procédé de placage et dans lequel le (les) couche (s) finale (s) (10) sont réchauffées à une température, qui est si élevée conformément à la courbe respective d'écoulement du matériau, que les couches finales (10) ont une résistance d'écoulement légèrement plus petite que la résistance à la compression du corps en mousse métallique (11 ) refroidi presque à température ambiante.

2. Procédé de fabrication de matériaux composites avec un noyau en mousse métallique, dans lequel une liaison métallique existe entre le noyau et une ou plusieurs couches finales métalliques et dans lequel le corps en mousse métallique déjà durci par précipitation peut être composé par une mousse métallique à porosité fermée ou à porosité ouverte ou également par une éponge métallique, **caractérisé en ce que** les couches finales (10) sont réchauffées de façon continue tout en passant à travers un ou deux dispositifs de réchauffement juste avant la liaison avec le corps en mousse métallique et dans lequel les couches finales (10) sont composées par des matériaux, qui ont des températures de fusion supérieures au noyau en mousse métallique (11) et dont la résistance d'écoulement, à l'état réchauffé, dépasse la résistance d'écoulement ou à la compression du corps en mousse métallique à l'état froid, et dans lequel les couches finales (10) sont réchauffées à une température, laquelle température est si élevée, que, pendant le laminage (6), les alvéoles extérieures de la mousse métallique fondent sur les zones de contact entre la couche finale (10) et le noyau (11) de la mousse métallique et la liaison entre la couche finale et le noyau est produite par l'adhérence ou la diffusion du matériau en mousse métallique sur les couches finales.

3. Procédé de fabrication de matériaux composites avec un noyau en mousse métallique selon la revendication 1 ou 2, **caractérisé en ce que**, les côtés des couches finales faisant face au corps en mousse métallique (11) sont purifiés au blanc métallique (3) avant le passage des couches finales (10) à travers le dispositif de réchauffement (7), et dans lequel les surfaces du corps en mousse métallique (11) sont purifiées (1) et le métal du corps en mousse métallique est activé au moyen de brosses par exemple juste avant la liaison dudit corps en mousse métallique (11 ) avec la ou les couche(s) finale(s) (10).

4. Procédé de fabrication de matériaux composites avec un noyau en mousse métallique selon l'une des revendications 1 à 3, **caractérisé en ce que**, après le laminage (6) la température du matériau composite (10, 11) est maintenue pendant un certain temps à un niveau, auquel une diffusion et une compensation entre les matériaux des couches finales (10) et le corps en mousse métallique (11) peuvent avoir lieu et **en ce que** par la suite le composite est refroidi de façon contrôlée.

5. Procédé de fabrication de matériaux composites avec un noyau en mousse métallique selon l'une des revendications 1 à 4, **caractérisé en ce que**, une ou plusieurs couches finales (10) peuvent comprendre non seulement par des éléments métalliques en tôle métallique ou de structure planiforme mais aussi par du grillage en fil métallique ou du tissu métallique composés par différents métaux.

6. Dispositif de fabrication de matériaux composites avec un noyau en mousse métallique pour la réalisation du procédé selon les revendications 1 à 5, **caractérisé en ce qu'**il comprend pour l'essentiel par des dispositifs de nettoyage (3), des dispositifs d'entraînement (5) et des dispositifs de réchauffement (7) avec des commandes calorifuges pour le traitement des couches finales (10), par des dispositifs de traitement de surfaces (1) pour le traitement du corps en mousse métallique (11), par une cage de laminoir (6) pour lier les couches finales et le corps en mousse métallique ainsi que par une chambre thermique (8) et des dispositifs de refroidissement (9), dans lequel les deux dispositifs mentionnés en dernier sont agencés après la cage de laminoir (6) et contrôlables de manière à ce qu'ils permettent un réchauffement variable, un maintien à chaud et un refroidissement du matériau composite.

7. Dispositif de fabrication de matériaux composites avec un noyau en mousse métallique selon la revendication 6, **caractérisé en ce que**
a) des dispositifs de traitement de surface (1) sont présents des deux côtés du corps en mousse métallique (11), qui est entraîné entre les deux couches finales (10), et
b) dans lequel des dispositifs de nettoyage (3) sont agencés d'un côté par rapport au côté faisant face au corps en mousse métallique (11 ) pour la purification des deux couches finales (10) et
c) dans lequel les dispositifs de réchauffement (7) pour les couches finales (10) sont agencés après les dispositifs de nettoyage (3) et
d) dans lequel, pour l'actionnement synchronisé des couches finales (10) et du corps en mousse métallique (11), les dispositifs d'entraînement (5) sont prévus pour entraîner les couches finales et le dispositif de transport (2) est prévu pour entraîner le corps en mousse métallique et
e) dans lequel la liaison du corps en mousse métallique (11 ) et des couches finales (10), lesdites couches finales passant vers le corps en mousse métallique forment les deux côtés, se produit dans la cage de laminoir subordonnée (6).

8. Dispositif de fabrication de matériaux composites avec un noyau en mousse métallique selon la revendication 6 ou 7, **caractérisé en ce que** les dispositifs de traitement de surface (1) effectuent l'activation métallique des surfaces du corps en mousse métallique et dans lequel les couches finales, après le traitement par les dispositifs de nettoyage (3) dans les dispositifs de réchauffement (7), sont distribuées de façon régulière sur les surfaces et sont réchauffées à une température requise pour la liaison dans le dispositif de réchauffement (7) et dans lequel les actionnements des dispositifs d'entraînement (5), des dispositifs de transport (2) et de la cage de laminoir (6) sont coordonnés pendant le procédé de laminage et dans lequel la puissance calorifique des dispositifs de réchauffement (7) est régulée en fonction de la vitesse de laminage.
